(19) Europäisches Patentamt
European Patent Office
Office européen des brevets

(11) **EP 4 148 620 A1**

(12) **EUROPEAN PATENT APPLICATION**

(43) Date of publication:
**15.03.2023  Bulletin 2023/11**

(21) Application number: **21306231.8**

(22) Date of filing: **08.09.2021**

(51) International Patent Classification (IPC):
**G06K 9/62** (2006.01)    **G06V 10/70** (2022.01)
**G06V 20/52** (2022.01)    **H04N 19/00** (2014.01)
**H04N 5/335** (2006.01)

(52) Cooperative Patent Classification (CPC):
**H04N 25/00; G06F 18/21; G06V 10/70;**
**G06V 20/52;** G06F 18/211

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Commissariat à l'énergie atomique**
**et aux énergies alternatives**
**75015 Paris (FR)**

(72) Inventor: **CUBERO MONTEALEGRE, Luis Angel**
**38054 GRENOBLE CEDEX 9 (FR)**

(74) Representative: **Lavoix**
**2, place d'Estienne d'Orves**
**75441 Paris Cedex 09 (FR)**

(54)    **IMAGE PRE-PROCESSING DEVICE CONFIGURED TO PRE-PROCESS IMAGE DATA BEFORE OBJECT LOCALIZATION AND/OR CLASSIFICATION**

(57)    The invention concerns an image pre-processing device comprising:
- a features detector (12);
- a virtual static image generator (14);
- a determining module (16);
- a scoring module (18);
- a region of interest selection module (30);
and further comprises:
- a features local change detector (20);
- a virtual dynamic image generator (22);
- an integral image generator (24);
- a dynamic region determination module (26);
- a filtering module (28) configured to provide to said scoring module only the region proposals of a current frame comprising a number of local changes higher than a predetermined threshold,
said region of interest selection module further comprising :
- an inter-frame region of interest filter (34);
- an update module (38) configured to update a list of regions of interest associated with the whole image sequence.

FIG.1

EP 4 148 620 A1

**Description**

The present invention relates to an image pre-processing device configured to pre-process image data provided as a matrix of pixels per frame wherein all pixels per frame are read before object localization and/or classification and/or other operation made on object.

The present invention also relates to an imager comprising an image sensor providing image data as a matrix of pixels per frame wherein all pixels per frame are read.

The disclosure relates to computer vision.

More specifically, the disclosure relates to an integrated circuit designed to implement low power and embedded artificial intelligence (AI) for computer vision. Indeed, research and development on deep neural networks for example increased the use of artificial intelligence in computer vision and for example for imaging applications such as object detection (OD) comprising multi-scale and multi-class localization and classification of different objects in an image scene.

Such an imaging application corresponding to object detection is for example interesting for virtual reality, mobile applications, autonomous driving, and smart surveillance. However, implementing object detection is still complex, hard to embed and energy-hungry due to its large computational footprint, which is not always the most appropriate to be embedded in smart devices, such as smartphones, usually battery-driven.

To improve object detection some image pre-processing solutions were proposed such as the ones associated to the image sensors described respectively in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, or, as introduced by C. Soell et al in the article entitled "Low-power analog smart camera sensor for edge detection" ICIP, 2016, but these solutions are not optimal in terms of features accuracy such as angular computation, memory and runtime and/or are not able to take into account high lighting-conditions dynamic range.

Two other image pre-processing solutions are respectively introduced by T.-H. Hsu et al. in the article entitled "A 0.5-V Real-Time Computational CMOS Image Sensor With Programmable Kernel for Feature Extraction," IEEE Journal of Solid-State Circuits, 2020, and by C. Posch et al. in the article "Retinomorphic Event-Based Vision Sensors: Bioinspired Cameras With Spiking Output," Proceedings of the IEEE, Vol, 102, 2014, however these two solutions are complex to implement and hard to embed, the one introduced by T.-H. Hsu et al. involving a programmable analog architecture requiring, among other things, MAC operations, whereas the one introduced by C. Posch et al. involves complex pixels.

The invention therefore aims to address the problems of optimizing image pre-processing pipeline designed to improve object detection, by providing a low-power image pre-processing pipeline while boosting its processing time and still providing a qualitative information key for object localization and classification.

To this end, the object of the invention is an image pre-processing device configured to pre-process image data provided as a matrix of pixels per frame, wherein all pixels per frame are read before object localization and/or classification and/or other operation made on object, wherein said image pre-processing device comprising :

- a features detector configured to detect features in each current frame of an image sequence of a scene and to encode, for each pixel of each current frame, a N-bit feature information representative of a feature value of said pixel;
- a virtual static image generator configured to generate, a map, associated to each current frame, and comprising said N-bit feature information associated to each pixel;
- a determining module configured to determine, within each current frame, a plurality of region proposals, each region proposal being associated to a same feature;
- a scoring module configured to assign a score to each received region proposal by taking into account predetermined rules of assignment;
- a region of interest selection module configured to select, as a function of their score, regions of interest among region proposal(s) scored by said scoring module, said region of interest selection module comprising an intra-frame region of interest filter configured to select one region of interest among several distinct spatial regions of interest potentially associated to a same object;

wherein said image pre-processing device further comprises:

- a features local change detector configured to detect a local change of features between two successive frames of the image sequence and to encode, for each pixel of the current frame corresponding to the last frame of said two successive frames, a one bit dynamic information, a first value of said one bit dynamic information being representative of a static feature belonging to both successive frames, a second value of said one bit dynamic information being representative of a dynamic feature changing between said two successive frames;
- a virtual dynamic image generator configured to generate, from said one bit dynamic information associated to each pixel, a virtual dynamic image representative of each local change between said two successive frames;
- an integral image generator configured to generate a data structure corresponding to a summed-area table of said virtual dynamic image;

- a dynamic region determination module configured to receive the region proposals provided by said determining module and said integral image provided by said integral image generator, and configured to use said integral image to count the number of local changes per region proposal;
- a filtering module configured to provide to said scoring module only the region proposals of the current frame comprising a number of local changes higher than a predetermined threshold,

said region of interest selection module further comprising :

- an inter-frame region of interest filter configured to select one region of interest among several distinct temporal regions of interest belonging to two successive frames and potentially associated to a same object; and
- an update module configured to update a list of regions of interest associated with the whole image sequence.

Thus, the image pre-processing device is configured to output both static and dynamic features to boost processing time since only the region proposals of the current frame comprising a number of local changes higher than a predetermined threshold are provided to the scoring module.

In addition, static features are remained and also provided for object localization and classification, which ensures localization and classification quality by avoiding loss of essential information, like angle and magnitude information.

In other words, the present solution proposes a pre-processing device to alleviate power by boosting the localization with a sparse matrix encoding features that are moving, and at the same time, information key for classification related to static features is also provided.

According to particular embodiments, the image pre-processing device comprises one or more of the following characteristics, taken separately or in any technically feasible combination:

- said features detector and said features local change detector are operating on the same type of image features, or wherein said features detector and said features local change detector are operating on a different type of image features;
- when said features detector and said features local change detector are operating on the same type of image features, said type of image features corresponds to edges features;
- a set formed by said features detector comprises successively:

  - an image buffer comprising a correlated double sampling and a circular image buffer, said image buffer being configured to receive as input each frame of said image sequence, each frame being provided as a matrix of pixels;
- at least two gradient components computation modules respectively configured to provide a value of gradient according to two distinct axis;
- at least two absolute value computation modules respectively configured to provide an absolute value of the value of gradient provided by one of the at least two gradient components computation modules;
- a gradient magnitude computation module receiving, as input, the outputs of said at least two absolute value computation modules, said gradient magnitude computation module comprising a summation and quantization stages configured to encode said gradient magnitude as a 1-bit information;
- a gradient orientation computation module receiving, as input, the outputs of said at least two absolute value computation modules, said gradient orientation computation module comprising a trigonometric analog-to-digital converter and an encoder configured to encode said gradient orientation as a 2-bits information;

- said set further comprises a de-noising module, said de-noising module receiving, as input, the output of said image buffer, and said at least two gradient components computation modules receiving, as input, the output of said de-noising module;
- each of said at least two gradient components computation modules implements a linear kernel as: $k_{\hat{x}}$

$$k_{\hat{y}} = \begin{vmatrix} -1 \\ 0 \\ 1 \end{vmatrix}$$

= |-1 0 1| considering an x axis and considering a y axis;
- the gradient orientation computation module is configured to compute the gradient orientation for only one value of the 1-bit information associated to the gradient magnitude, said value representing a gradient magnitude higher than a predetermined magnitude threshold;
- said de-noising module is configured to compute the local light intensity value of each pixel and to servo-control the value of said predetermined magnitude threshold depending on said local light intensity value;
- a circuitry designed to implement said image buffer comprises at least five capacitances, one capacitance being dedicated to sample a predetermined pixel valued used by the following de-noising module;
- said circuitry designed to implement said image buffer comprises a sixth capacitance when a pixels binning is implemented;

- a circuitry designed to implement said de-noising module comprises at least a low-pass filter designed to convolute the gray-intensity-image with an average kernel;
- said circuitry designed to implement said de-noising module further comprises an intermediary buffer following said low-pass filter, said intermediary buffer being configured to hold averaged values provided by said low-pass filter along a predetermined number of rows associated to the frame size;
- a circuitry designed to implement said at least two gradient components computation modules, respectively configured to provide a value of gradient according to two distinct axis, comprises a same architecture for each axis implemented in parallel;
- a circuitry, designed to implement said summation and quantization stages configured to encode said gradient magnitude as a 1-bit information, comprises a switched-capacitance-amplifier.

The invention also relates to an imager comprising an image sensor providing image data as a matrix of pixels per frame, wherein all pixels per frame are read before object localization and/or classification and/or other operation made on object, wherein said imager comprises an image pre-processing device according to anyone of the preceding claims and an object localization and/or classification and/or other object operation implementation module , said image pre-processing device being configured to pre-process said image data provided by said image sensor before localization and/or classification and/or other operation made on object performed by said object localization and/or classification and/or other object operation implementation module.

The invention and its advantages will be better understood upon reading the following detailed description of a particular embodiment, given solely by way of a nonlimiting example, wherein this description is made with reference to the appended drawings, wherein:

- [Fig 1] figure 1 shows a block representation of an imager comprising an image pre-processing device according to the invention;
- [Fig 2] figure 2 shows a block representation of a feature detector according to a first embodiment of the present invention,
- [Fig 3] figure 3 shows a block representation of a feature detector according to a second embodiment of the present invention,
- [Fig 4] figure 4 shows a an image buffer circuitry according to one embodiment of the present invention,
- [Fig 5] figure 5 shows a de-noising module circuitry according to an embodiment of the present invention,
- [Fig 6] figure 6 shows an optional intermediary buffer circuitry added at the following of the circuitry of figure 5 in said de-noising module,
- [Fig 7] figure 7 shows an example of circuitry for implementing a gradient component computation module followed by an absolute value computation module of figure 2,
- [Fig 8] figure 8 shows an example of circuitry for implementing the summation and quantization stages of figure 2.

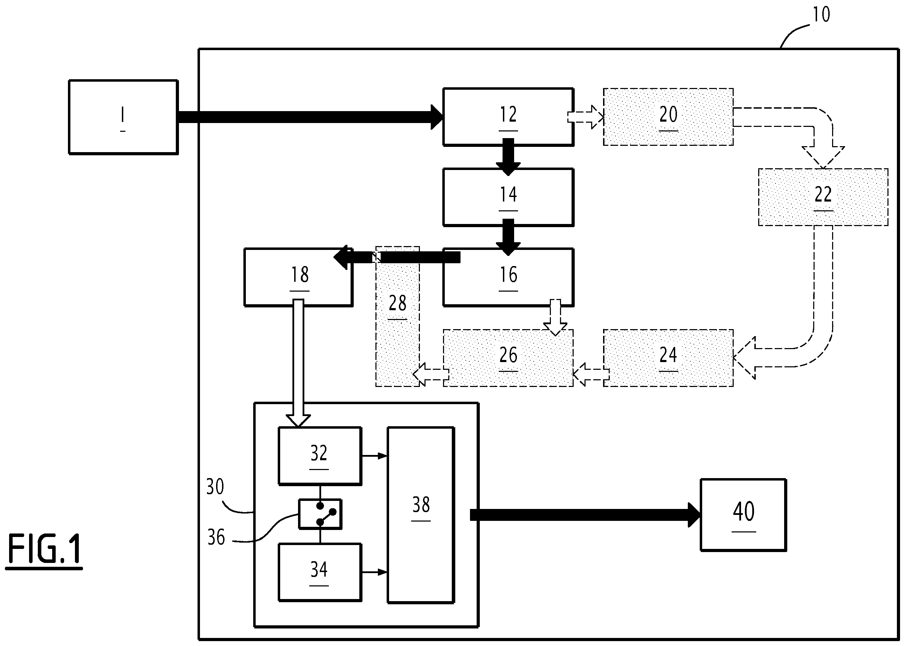

An example of an imager according to the invention is illustrated by figure 1. More precisely, said imager comprises first an image sensor configured to obtain a sequence of images I of a scene and to provide associated image data as a matrix of pixels per frame, wherein all pixels per frame are read, for example.

The imager of figure 1 can be a two-layer imager or a three-layer imager.

For example, said image sensor is a CMOS sensor (CMOS standing for Complementary Metal Oxide Semiconductor), providing, per frame of said sequence of images I comprising L images $I_i$ with $0 \leq i \leq L - 1$, L being an integer corresponding to the number of frames of said sequence of images I, a matrix of pixels with a column parallel read-out.

An imager according to the present invention comprises a matrix of pixels, each pixel including a sensing element. The nature of the sensing element may vary according to the application. A sensing element is for example a visible light sensor, an infrared sensor, an ultrasound sensor, etc...

According to another example of image sensor, each image $I_i$ is obtained by a reconstruction process taking into account a plurality of image frames to produce a reconstructed image frame. For example, a reconstructed image frame can be a very high dynamic range image frame obtained by treatment of a sequence of image frames captured with different imaging condition, for example with different exposition times, different integration times in a visible sensor, etc... Another type of reconstructed image may be an image for which each pixel value corresponds for example to the speed or the depth of an element sensed at that pixel.

In addition, said imager comprises an object detection pipeline 10. Said object detection pipeline 10 comprises an image pre-processing device according to the invention.

In the following, by "feature" it is meant a local image characteristic whose type corresponds, for example, to an edge, a motion, a salient point, etc., each type of feature being configured to be used during a region of interest search implemented as a function of the finality of the whole process, said finality corresponding to object localization and/or to classification, etc. A feature is "local" in the sense that it is not a unique characteristic of the whole image, by rather a characteristic of a pixel and its neighbour pixels, on a rather small part of the image.

In the following, by "object" it is meant a graphical element of the scene (the scene to which an image sequence is associated), each object of a scene being predefined and considered as a whole independently from another object of said scene. An object corresponds for example to a person (i.e. a human) of said scene, or to a smaller part of said person for example a hand, a foot, etc.

More precisely, said image pre-processing device comprises first:

- a features detector 12 configured to detect features in each current frame $I_i$ of an image sequence of a scene and to encode, for each pixel of each current frame $I_i$, a N-bit feature information (e.g. a "feature information" corresponds for example to a gradient magnitude and/or to a gradient orientation when said feature corresponds to an edge as explained further; it could also correspond to a depth when said feature is a salient point, or correspond to a speed when said feature is a motion) representative of a feature value of said pixel;
- a virtual static image generator 14 configured to generate, a map, associated to each current frame $I_i$, and comprising said N-bit feature information associated to each pixel;
- a determining module 16 configured to determine, within each current frame $I_i$ a plurality of region proposals, each region proposal being associated to a same feature;
- a scoring module 18 configured to assign a score to each received region proposal by taking into account predetermined rules of assignment.

Specifically according to the present invention, said image pre-processing device further comprises:

- a features local change detector 20 configured to detect a local change of features between two successive frames of the image sequence and to encode, for each pixel of the current frame $I_i$ corresponding to the last frame of said two successive frames $I_{i-1}$ and $I_i$, a one bit dynamic information, a first value of said one bit dynamic information being representative of a static feature belonging to both successive frames, a second value of said one bit dynamic information being representative of a dynamic feature changing between said two successive frames;
- a virtual dynamic image generator 22 configured to generate, from said one bit dynamic information associated to each pixel, a virtual dynamic image representative of each local change between said two successive frames;
- an integral image generator 24 configured to generate a data structure corresponding to a summed-area table of said a virtual dynamic image;
- a dynamic region determination module 26 configured to receive the region proposals provided by said determining module 16 and said integral image provided by said integral image generator 24, and configured to use said integral image to count the number of local changes per region proposal;
- a filtering module 28 configured to provide to said scoring module 18 only the region proposals of the current frame $I_i$ comprising a number of local changes higher than a predetermined threshold.

In other words, said scoring module 18 receives, for the first frame $I_0$ of the image sequence I, all the region proposals of the plurality of regions determined by said determining module 16. For each following frames $I_{i\neq0}$ of said image sequence I, only the region proposal(s) determined by said determining module 16, and comprising a number of local changes higher than a predetermined threshold as detected by said dynamic region determination module 26, are provided by said filtering module 28 to said scoring module 18.

In addition, said image pre-processing device further comprises a region of interest selection module 30 configured to select, as a function of their score, regions of interest among the region proposal(s) scored by said scoring module 18, said region of interest selection module 30 comprising :

- an intra-frame region of interest filter 32 configured to select one region of interest among several distinct spatial regions of interest potentially associated to a same object,
- an inter-frame region of interest filter 34 configured to select one region of interest among several distinct temporal regions of interest belonging to two successive frames and potentially associated to a same object;
- a switch 36 configured to connect said inter-frame region of interest filter 34 to said intra-frame region of interest filter 32, when the considered processed current frame $I_i$ is at least the second frame $I_{i\geq1}$ of said image sequence I;
- an update module 38 configured to update a list of regions of interest associated with the whole image sequence I.

In addition, said object detection pipeline 10 comprises an object localization and/or classification and/or other object operation implementation module 40, said module 40 being configured to implement object localization and/or classification and/or other operation made on object, the image pre-processing device being configured to pre-process said image data provided by said image sensor before localization and/or classification and/or other object operation implementation module 40.

In other words, the object detection pipeline 10 according to the present invention allows detecting low-level features with both static and dynamic data.

More precisely, on the one hand, the first "static sub-pipeline" formed by the features detector 12, the virtual static image generator 14, the determining module 16 and the scoring module 18, is configured to compute and use static low-level features (e.g. oriented gradients, each oriented gradient being locally associated to a pixel belonging to a feature corresponding, for example, to an edge comprising a plurality of pixels) of each frame of said image sequence I, with aggressive quantization, such that each pixel value corresponds to a 3-bits information, with for example 2 bits for the orientation (e.g. the angle when said feature corresponds for example to an edge), and 1 bit for the magnitude of a feature corresponding to a contour. For example, when said feature corresponds, for example, to an edge, said first "static sub-pipeline" is a digital or an analog stage configured to detect oriented gradients outputting 3 bits per image (i.e. frame) pixel, where the first bit is for the gradient magnitude, and the last two bits are for the orientation.

In other words, the first "static sub-pipeline" computes (i.e. stages, implemented by modules 12, 14, 16 and 18, obtain static features) and the first "static sub-pipeline" uses also those static features, since the scoring module 18 does the scoring of region proposals based on those static features, and the virtual static image generator 14 generates the virtual static image (which in a particular example, wherein said type of feature corresponds to an edge, includes a static features clustering which consists to cluster together neighbouring edge pixels of similar orientation to form groups, in order to aid in later computations).

On the other hand, the second "dynamic sub-pipeline" formed by the features local change detector 20, the virtual dynamic image generator 22, the integral image generator 24, the dynamic region determination module 26 and the filtering module 28, is configured to compute local changes that relate to the temporal evolution of the scene, without changing the matrix of pixels as such, and to encode this change as a single bit per pixel such that each pixel has an output of 4 bits in total, namely the previous 3-bits information associated with the pixel value of feature plus a single bit representing a change or not of said feature value regarding the previous frame.

Thus, instead of classically detecting local lighting changes, which is prone to critically high data rates with more significant redundancy and noise due to lighting changes and not motion, the object detection pipeline 10 according to the present invention tracks local (i.e. for each pixel) temporal evolution by detecting changes in the static feature magnitude, which permits to reduce data rate, and to generate "better quality" dynamic features, due to the constraint of the change of a static feature. In other words, dynamic data indicates for example where are the "contours" in the scene that are moving.

It will be noticed that the static sub-pipeline may consider feature of an object which can be moving, for example when the feature considered is the motion. In that case, the dynamic sub-pipeline will track change in the motion, for example change in the speed which corresponds to an acceleration on the contrary. It will then be understood that static/dynamic sub-pipeline refers here to the treatment respectively of a feature and the derivative of this feature with time.

Moreover, it will be noticed that the features detector 12 may use as input one or more image frames to provide a feature information corresponding to a current image frame under treatment. For example, when the feature information to be calculated corresponds to a motion, it may be interesting to consider the current image $I_i$ and the previous one.

According to one embodiment, not represented, said features detector 12 and said features local change detector 20 are operating on a different type of image features. For example, said features detector 12 is an edge feature detector, as introduced by C. L. Zitnick et al. in the article entitled "Edge Boxes: Locating Object proposals from Edges," European Conference on computer Vision 2014, whereas said features local change detector 20 (or inversely said features detector 12) implements and/or uses, as input, the results of different features detectors, as a features detector using a Scale Invariant Feature Transform (SIFT) algorithm, or using a feature-based algorithm (FAST) or using a Speed-Up Robust Features (SURF) algorithm, or using a convolutional neural network (CNN), etc.

In other words, according to another embodiment, not represented on figure 1, said features detector 12 is an n-bit edge detector, said features local change detector 20 is an n-bit change detector, based on static features, which takes as input another feature type (i.e. for example different from edges gradient magnitudes output from stage 12) such as the ones provided by different features detectors using SURF, SIFT, and/or a CNN for generating dynamic features, the module, providing said another feature type as, input being not represented on figure 1.

According to the embodiment as represented by figure 1 said features detector 12 and said features local change detector 20 are operating on the same type of image features. In other words, according to the embodiment as represented by figure 1, said features detector 12 and said features local change detector 20 are both operating by using the same type of features outputted by features detector 12.

For example, said features local change detector 20 is an n-bit change detector which takes as input edges information output from said features detector 12, (i.e. a common type of feature used by detectors 12 and 20 corresponds to oriented edges information as further described). According to another example, said features detector 12 and said features local change detector 20 may use another type of image feature information (i.e. different from oriented edges) and use accordingly, in step 16 a region proposal algorithm different than the well-known "edge boxes" algorithm. For example, it is possible to use a CNN dedicated to region proposals or another equivalent algorithm for region proposals on the chosen image features used by said features detector 12 and said features local change detector 20.

In particular, according to the example, wherein image features used by both said features detector 12 and said features local change detector 20 corresponds to edges features, said virtual static image generator 14 is configured to provide a 3-bit edges map of each frame, the determining module 16 is configured to determine, within each frame a plurality of region proposals as introduced by C. L. Zitnick et al. in the article entitled "Edge Boxes: Locating Object proposals from Edges," European Conference on computer Vision 2014 and to output generated data-structures as described in the following, and the scoring module 18 is thus configured to perform an Edge Boxes scoring using the data-structures generated by the determining module 16.

More precisely, the determining module 16 determines a "big" plurality of region proposals, by creating a dense grid of distributed regions of different sizes and different aspect ratios along the image. The determining module 16, as introduced by C. L. Zitnick et al., associates edges to join them into segments during a clustering stage and to associate them as potential contours. Then, the determining module 16, as introduced by C. L. Zitnick et al. creates data structures from the edges data, clusters and contours information to then efficiently perform the scoring in module 18. In other words, such region proposals that are provided to the scoring module 18 are not, at this stage, necessarily the regions that perfectly "englobe" a feature change. For instance, if a person is saying "good-bye" with his hand, and she/he is in front of the camera, only the arm portion is showing changes, whereas the region proposals pipeline is intended to score and output for example a region proposal corresponding to the whole person, even though she/he was moving only the hand. The rest of the person is detected thanks to the edges information along with the first stages of Edge Boxes.

The problem is that the initial amount of boxes (i.e. region proposals) initially proposed by module 16, as introduced by C. L. Zitnick et al., is classically too big in terms of computing resources and/or runtime, and the present invention proposes to circumvent this issue by alleviating the charge of scoring in module 18 by the filtering performed by modules 26, 28.

Such particular example based on the common use of edges features by both said features detector 12 and said features local change detector 20, is then used in the following of the specification.

Considering this particular example, as represented by figure 1, the features local change detector 20 receives, for each frame $I_{i\neq0}$, from said features detector 12 a Boolean matrix as input, said matrix being composed of only the feature magnitude (i.e. not the lighting magnitude) bits for each pixel. For each frame $I_{i\neq0}$, said features local change detector 20 computes a 1 bit-XOR function of the incoming matrix associated with the considered frame $I_{i\neq0}$ and the matrix associated with the previous frame $I_{i-1}$.

In other words, said 1 bit-XOR function is used to determine if $\frac{dF(x,y)}{dt} > F_{ref}$ or not where F is the feature magnitude value of each pixel with x and y coordinates, $F_{ref}$ being a predetermined value used to evaluate if the variation of the feature magnitude value of a same pixel in two successive frames is substantial or not and thus represents a local change between these two successive frames.

Thus, said features local change detector 20 is configured to encode, for each pixel of said considered frame $I_{i\neq0}$, a one bit dynamic information, a first value of said one bit dynamic information being representative of a static feature belonging to both frames $I_{i\neq0}$ and $I_{i-1}$, a second value of said one bit dynamic information being representative of a dynamic feature changing from frame $I_{i-1}$ to frame $I_{i\neq0}$.

Moreover, for each frame $I_{i\neq0}$, said virtual dynamic image generator 22 is configured to generate a virtual dynamic image corresponding to a 1-bit dynamic features map, the size of said map being equal to NxM, where N is the number of row of pixels of each image (i.e. frame) of said sequence of images I, and M corresponds to the number of columns of pixels.

Such an implementation implies that said features local change detector 20 and the following virtual dynamic image generator 22 comprise or are connected to a digital memory space, not represented, of NxM.

It has to be noted that according to an optional aspect, such a size of digital memory space can be reduced by a factor $n^2$ if an nxn binning is applied.

Said 1-bit dynamic features map generated by said virtual dynamic image generator 22 is then provided to said integral image generator 24 configured to generate an integral image corresponding to a summed-area table, which is a known standard data structure.

More precisely, said integral image generator 24 counts effectively the number of features in rectangular subsets obeying the predetermined rules of the summed-area-table calculation (see Wikipedia page: https://en.wikipedia.org/wiki/Summed-area table), and not obeying necessarily the rectangular subsets as defined by the output of determining module 16.

Successively, using said integral image (i.e. said summed-area-table) provided by said integral image generator 24, the dynamic region determination module 26 is configured to fastly and efficiently compute the sum of local changes in a rectangular subset of the pixel matrix associated to frame $I_{i\neq0}$. Considering the present example based on the use of Edge boxes, each rectangular subset used by said dynamic region determination module 26 corresponds to an Edge box, as defined by the output of determining module 16.

In addition, said dynamic region determination module 26 is configured to compare said number of local change(s) associated to each Edge box with a predetermined threshold.

If such a number of local change(s) is higher than said predetermined threshold, the dynamic region determination module 26 determines that the associated Edge box comprises enough dynamic features, corresponding according to the present example to an Edge feature, and for example send an indicator to the filtering module 28, the value of said indicator representing the fact that the considered Edge box comprises enough dynamic features.

In presence of such a value of indicator representing the fact that the considered Edge box comprises enough dynamic features, the filtering module 28 allows said considered Edge box to be processed by said scoring module 18. On the contrary, in absence of such a value of indicator representing the fact that the considered Edge box comprises enough dynamic features, the filtering module 28 prevents processing said considered Edge box by said scoring module 18.

Concerning the region of interest selection module 30, according to a particular variant, said intra-frame region of interest filter 32 and/or said inter-frame region of interest filter 34 are configured to apply a non-maximum suppression (NMS) technique introduced by Canny (see Wikipedia page: https://en.wikipedia.org/wiki/Edge detection#Canny edge detection).

Thus, such an application example in which, according to the present invention, dynamic features maps are used for object localization, to adapt/modify the state of the art method called Edge Boxes, permits to avoid spending non negligible runtime detecting the "objectness" of regions, as introduced by C. L. Zitnick et al. in the article entitled "Edge Boxes: Locating Object proposals from Edges," European Conference on computer Vision 2014, that were already calculated in last frames (i.e. previous frames), and where no change has occurred. Moreover, the present invention permits to relate the temporal evolution of the scene with the current frame that is being analyzed.

For instance, supposing that one specific object is known to be at a certain location in the scene (because it was previously detected), and until the current frame, such specific object has not moved. The present invention avoid spending resources detecting it again.

In other words, such a weakness of frame based approaches of the state of the art is alleviated according to the present invention with dynamic information showing the temporal evolution of the scene.

In one embodiment, it could be also assumed that only dynamic features are output (without the static ones), but, the localization process performed then by said object localization and/or classification module could be "confused" when objects move partially, since there may not be enough topological information allowing the algorithm to "understand" that the moving part belongs to a bigger object. Moreover, in this latter case the pipeline 10 could also fail when the scene is totally static, this is the reason why the preferred embodiment of the present invention proposed to detect low-level features with both static and dynamic features.

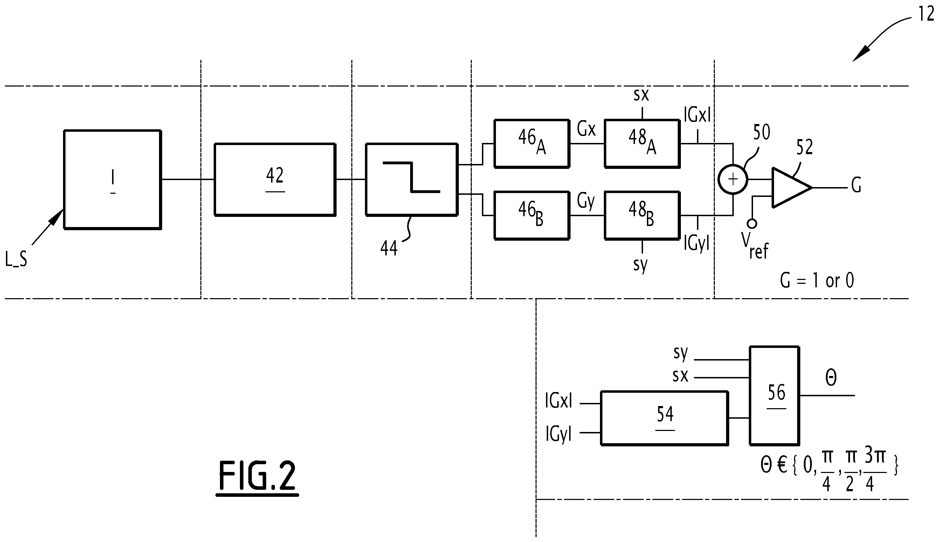

In addition, as described in the following in relation with figures 2 to 8 some modifications of the features detector, as introduced by C. L. Zitnick et al., are proposed according to an embodiment of the present invention.

More precisely, figure 2 shows a block representation of said features detector 12 of figure 1 proposed according to a first embodiment of the present invention and applied to adapt the features detector of the state of the art method as introduced by C. L. Zitnick et al.

Said features detector 12 comprises a series of stages for near pixels-matrix edge-extraction, and based on typical edge extraction algorithms, and optimized according to the present invention.

More precisely, the present approach targets, for example, column-parallel computations, instead of inside-pixel architectures of the state of the art, that in order to be able to separate pixels-matrix design from pre-processing, then allowing optimizing both independently.

Moreover, inside-pixel architectures have important issues with fill-factor, fixed-pattern-noise and pixel complexity: all of which making it more difficult to implement (and model) a pre-processing pipeline like the one proposed according to the present invention.

The series of stages for near pixels-matrix edge-extraction of features detector 12 according to the embodiment of figure 2 comprises first an image-acquisition of a sequence I of images corresponding to a standard $N \times M$ pixels-matrix with column parallel read-out, each image (i.e. frame) being obtained in the presence of a light source L_S.

Moreover said series of stages for near pixels-matrix edge-extraction of features detector 12 further comprises successively:

- an image buffer 42 comprising a correlated double sampling and a circular image buffer, in particular a 5x5-pixels circular-image-buffer, said image buffer 42 being configured to receive as input each frame of said image sequence, each frame being provided as a matrix of pixels with a column parallel read-out;
- at least two gradient components computation modules $46_A$, $46_B$ respectively configured to provide a value of gradient, Gx, Gy, according to two distinct axis x and y respectively;
- at least two absolute value computation modules $48_A$, $48_B$ respectively configured to provide an absolute value $|Gx|$, $|Gy|$ of the value of gradient Gx, Gy provided by one of the at least two gradient components computation modules $46_A$, $46_B$, such absolute value computation modules $48_A$, $48_B$ being also optionally configured, specifically according to the present invention to take into account two additional signals respect to them: sx and *sy,* because the gradient component sign (direction to left or right) is important for the angle;
- a gradient magnitude computation module receiving, as input, the outputs |Gx|, |Gy| of said at least two absolute value computation modules $48_A$, $48_B$, said gradient magnitude computation module comprising a summation 50 and quantization 52 stages configured to encode said gradient magnitude G as a 1-bit information;

- a gradient orientation computation module receiving, as input, the outputs |Gx|, |Gy| of said at least two absolute value computation modules $48_A$, $48_B$, said gradient orientation computation module comprising a trigonometric analog-to-digital converter ADC 54 and an encoder 56 configured to encode said gradient orientation $\theta$ as a 2-bits information encoding four values of orientation $\theta$ corresponding to 0, $\frac{\pi}{4}$, $\frac{\pi}{2}$, $\frac{3\pi}{4}$.

As an optional supplement, said series of stages for near pixels-matrix edge-extraction of features detector 12 further comprises a de-noising module 44, said de-noising module receiving, as input, the output of said image buffer 42, and said at least two gradient components computation modules receiving, as input, the output of said de-noising module 44. In particular, said de-noising module 44 is configured to perform an average 3x3-kernel de-noising.

Moreover according to a particular optional aspect, each of said at least two gradient components computation modules $46_A$, $46_B$ implements a linear kernel

$$k_{\hat{y}} = \begin{vmatrix} -1 \\ 0 \\ 1 \end{vmatrix}$$

as: $k_{\hat{x}} = |\text{-1 } 0 \text{ 1}|$ considering an x axis and considering a y axis.

According to one embodiment, said gradient magnitude computation module implements a summation of both absolute values |Gx|, |Gy| of gradient components, and compares such summation with a fixed reference $V_{ref}$, corresponding to a gradient magnitude, as introduced by C. Soell et al in the article entitled "Low-power analog smart camera sensor for edge detection" ICIP, 2016.

According to another aspect, gradient orientation computation module is configured to implement, with successive approximations, the approach suggested by J.Choi et al. in the article entitled "A 3.4-uW Object Adaptative CMOS Image Sensor With Embedded Feature Extraction Algorithm for Motion-Triggered Object-of-Interest Imaging" IEEE Journal of Solid State Circuits, vol 49, n01, pp 289-300, 2014, where the authors implement a 8-bit trigonometric analog-to-digital converter in a more complex way to compute the gradient orientation, with higher resolution and by using values already in the digital domain, transferred it to the analog domain and then went backwards to the digital side. In other words, according to the present invention, the trigonometric analog-to-digital converter 54 is simplified, by implementing less computing comparisons, to obtain a 2-bit trigonometric (i.e. with a lower resolution than the one disclosed by J. Choi et al.).

It has to be noted the features detector 12 architecture according to the present invention proposes, for example, oriented gradients, since it is compatible with column parallel computation, low power, and can be used of object localization and classification and not logarithmic gradient, as introduced in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, which does not propose to implement the optional de-noising module 44 proposed according to the present invention.

Moreover, regarding the state of the art method, as introduced in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, one improvement provided by the present invention is to separate the angular computation (i.e. gradient orientation) from the magnitude, which permits to detect dynamic information without the need of implementing an inverse tangent approximation.

The proposed pre-processing, involving spatiotemporal output, permits also for example to replace the oriented gradients by another type of features provided by a first convolutional neural network (CNN) layer and exploit methods for tracking the change of CNN features like the one introduced by T.-H. Hsu et al. in the article entitled "A 0.5-V Real-Time Computational CMOS Image Sensor With Programmable Kernel for Feature Extraction," IEEE Journal of Solid-State Circuits, 2020. Indeed, one key of the present invention is that the proposed 4-bit spatiotemporal features (namely the previous 3-bits information associated with the pixel value of feature plus a single bit representing a change or not of said feature value regarding the previous frame) are "richer in information" while they are "rare" in the image (compared to its total size). Thus, the dynamic output according to the present invention is sparse and easier to process. In other words, it has to be noted that quantized features magnitudes for edges, for example, are less prone to change from frame to frame. So, there are less dynamic features since less changes are detected. However, this little amount of changes reflects important information since it indicates that something move, and that the region that moves was likely to be around a contour. Moreover, the amount of pixels detected as edges (i.e. with a feature magnitude value equal to one) is experimentally around 10 %, which indicates that the static features map is usually sparse, and that is enhanced thanks to image buffer 42.

In addition, it has to be noted that the state of the art method, as introduced in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, does not propose to implement the optional de-noising module 44 proposed according to the present invention.

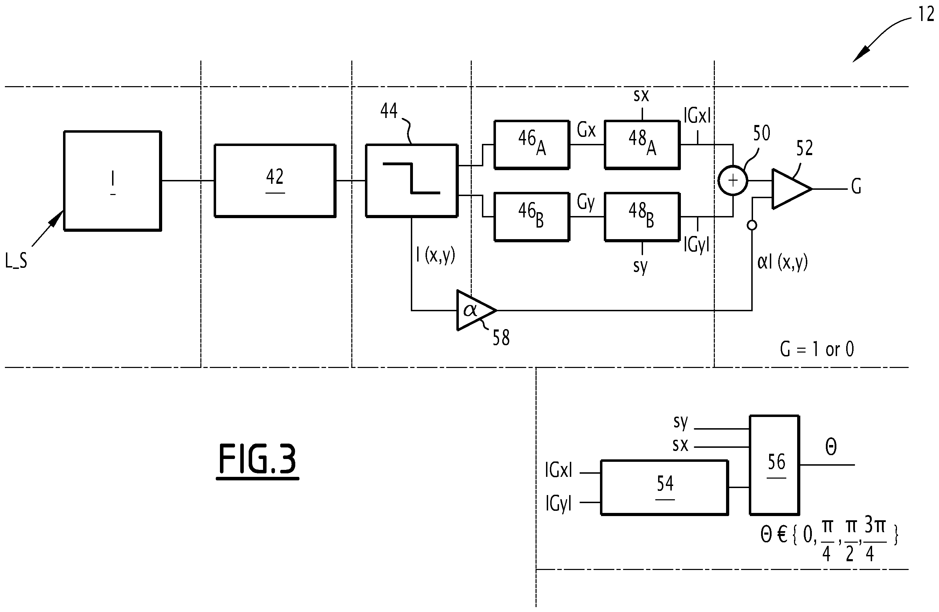

Figure 3 shows a block representation of said features detector 12 of figure 1 according to a second embodiment of the present invention applied to adapt the state of the art method called Edge Boxes, and improved regarding the first embodiment of figure 2 to deal with strong lighting conditions variations

More precisely, in comparison with the first embodiment illustrated by figure 2, in the embodiment of figure 3 said de-noising module 44 is configured to compute the local light intensity value of each pixel associated to a pixel location (x, y) and to servo-control the value of said predetermined magnitude threshold depending on said local light intensity value.

Indeed, the present invention proposes to detect an edge at pixel location (x, y), the estimated local gradient magnitude when it is higher than a value proportional, according to a proportional factor $\alpha$, to the local light intensity value.

In other words, the embodiment of figure 3 propose to detect locally "*relative gradients*", since its magnitude depends on the local light intensity value instead of a reference $V_{ref}$ as proposed in the first embodiment of figure 2.

In the following, one example of circuitry for each stage of the features detector 12 is detailed.

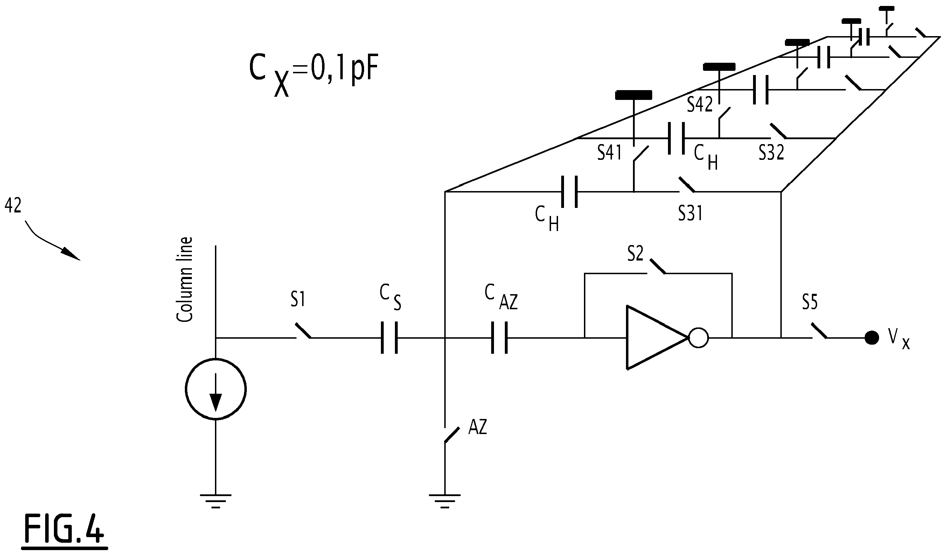

Figure 4 shows an image buffer circuitry according to one embodiment of the present invention.

Firstly, it has to be noted that such an image buffer 42 implementing a correlated-double-sampling (CDS) is important to mitigate reset-noise, especially because the architecture is multi-staged, and noise "propagates" during pre-processing.

In addition, the circular image buffer of said image buffer 42 is useful since gradient calculations depend on values of neighboring pixels, and according to the present invention, avoiding at maximum to read pixels directly from the matrix several times is a key.

Indeed, different values of pixels are required several times, and one gradient value (i.e. magnitude plus orientation) depends on twenty-five values in the original image, if de-noising is applied.

For example, calculating the gradient at a pixel whose pixel location is (4, 5), depends on values from a 5x5-matrix in the original image due to the 2-stages (image acquisition and de-noising).

When computing the gradient at a pixel whose pixel location is now (3, 5), original-pixels-values that were used before for calculating the gradient at a pixel whose pixel location is (4, 5) are required again.

That is, the circular image buffer of said image buffer 42 permits to "keep" pixels values while they are still needed.

In comparison with an image buffer circuitry such as the one introduced in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, the image buffer circuitry 42 according to the proposed invention is, according to the embodiment of figure 4, modified to adapt it for including next the de-noising 44 of figures 2 or 3.

To that end, the image buffer circuitry 42 of figure 4 includes one capacitance being dedicated to sample a predetermined pixel valued used by the following de-noising module 44.

In other words, in comparison with the image buffer circuitry such as the one introduced in the article entitled "A data-compressive 1.5/2.75-bit Log-Gradient QVGA Image Sensor With Multi-Scale Readout for Always-on Object Detection" by C. Young et al. IEEE Journal of Solid State Circuits, Vol 54, No. 11, 2019, the image buffer circuitry 42 of figure 4 includes five capacitances $C_H$ instead of four.

According to an optional aspect, if n x n pixel binning is implement, a sixth capacitance $C_H$ is added in parallel to the circuit as represented in figure 4.

The circuit of figure 4 performs CDS by sampling reset noise on the capacitance $C_s$, and the the pixel-read-value minus the reset voltage stored in $C_s$ is sampled at any of the capacitances $C_H$ during sampling. Switches S31 to S35 determine the capacitance at which each pixel value goes. Each $C_H$ samples one row at a time and a digital part controls the row corresponding to each capacitance. That is such that the circuit behaves as a circular buffer. Taken into account that this happen for every column, the whole first preprocessing stage buffers five complete rows, according to the present invention (instead of three rows using the circuitry of C. Young), at the same time during the preprocessing. Then, when a new row is read and sampled, the rest of the pipeline computes new features, a row output of features is generated, and then a new row is sampled again, overwriting a row that is no longer used for preprocessing.

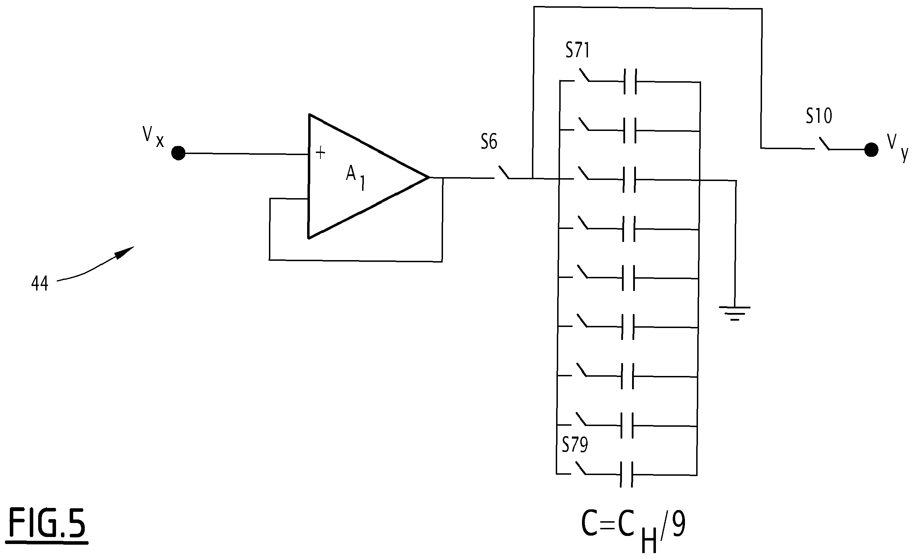

Figure 5 shows a de-noising module circuitry according to an embodiment of the present invention. Indeed, according the present invention, the optional de-noising module 44 has an important impact in the amount of pixels that are detected when the feature corresponds to edges, and improves the performance, for example, for region of interest (ROI) proposals with the state of the art method called Edge Boxes or with quantized gradients.

Such performance relates to the mitigation of high spatial gradients corresponding to textures and not to overall topologies.

When the de-noising module 44 is not implemented, the elevated amount of edges increases the amount of clusters of edges in Edge Boxes, which increases memory and runtime as well. Thus, de-noising allows to decrease memory and runtime, at the same time that ROIs are obtained with the same or even better accuracy.

To implement such a proposed de-noising module 44, an average kernel is proposed advantageously as being simple to implement while providing good simulation results, in comparison with more complex kernel type, which does not change significantly the accuracy for ROI proposals.

Such a proposed de-noising module 44 stage, furthermore combined with gradient computation combined modules $46_A$, $46_B$ stage, increases the performances of the proposed, for example column-parallel, staged-pipeline 10, in comparison with the pipeline architecture as introduced by T.-H. Hsu et al. in the article entitled "A 0.5-V Real-Time Computational CMOS Image Sensor With Programmable Kernel for Feature Extraction," IEEE Journal of Solid-State Circuits, 2020, wherein only one single stage, either de-noising or pixel differences, is performed before the analog to digital converter ADC, and permits to avoid making rather complex the programmable nature of its analog architecture.

More precisely, the circuit of figure 5 comprises at least a low-pass filter aiming at convoluting (i.e. on the fly) the gray-intensity-image with, for example, a 3x3 averaging kernel.

It has to be noted that such de-noising stage 44 adds a complexity and power overhead regarding other state of the art edge-detectors but advantageously relaxes computational effort for Edge Boxes in terms of memory and runtime to enhance and/or optimize the artificial intelligence performance/runtime trade-off for next processing stages as the one performed by the localization and/or classification and/or other object operation implementation module 40.

More precisely, during the first sampling phase, switches S6 of the low-pass filter circuit of the de-noising module of figure 5 is closed whereas S10 is open. Switches S71 to S79 select which capacitance the value is sampled on, and the mapping between the sampling capacitance and the row, column positions in the original image is carried by a digital-state-machine, not represented. Thus, a 9 x 9 window of the original image is sampled in those capacitances. For the next sampling stage corresponding to the gradient components calculation, S6 opens and S10 closes, such that the output voltage $V_y$ represents an average of sampled values.

According to a particular and optional aspect of the proposed invention, said de-noising module 44 further comprises an intermediary buffer 60 following said low-pass filter, said intermediary buffer being configured to hold averaged values provided by said low-pass filter along a predetermined number of rows associated to the frame size.

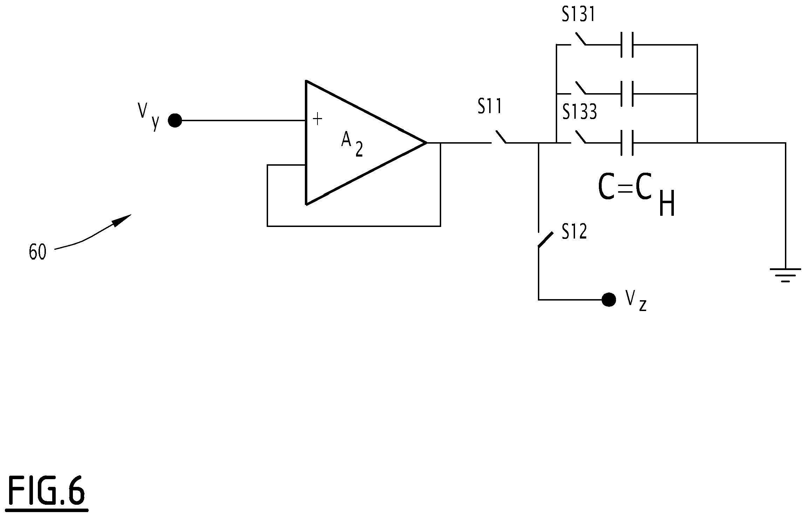

Figure 6 shows such an optional intermediary buffer 60 circuitry added at the following of the circuitry of figure 5 in said de-noising module 44.

The optional intermediary buffer circuitry according to the example of figure 6 is designed for holding averaged values along three rows (taking into account the size of the original image). To implement such a process for every column, three whole rows are indeed sampled by such an intermediary buffer circuitry, since in next stage, corresponding to the gradient components computation modules ($46_A$, $46_B$), a 3 x 3 window is for example necessary for gradients components computation.

For the first sampling stage performed by said intermediary buffer circuitry, switch S12 is open while S11 is closed. Switches S131 to S133 select the corresponding capacitance for sampling the denoised pixel value, and are controlled by a digital state machine, not represented, on the periphery, since switching signals are the same for all columns. For the reading step, switch S11 is open, while switch S12 closed, and again, switches S13j (with $1 \leq j \leq 3$) select the value to read.

It has to be noted that according to another embodiment said low pass filter of figure 5 and said intermediary buffer of figure 6 are merged into one single block associated to the de-noising module 44.

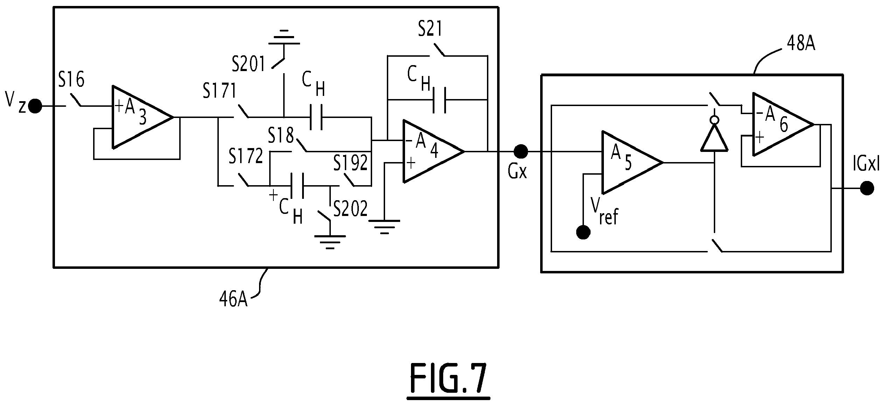

Figure 7 shows an example of circuitry for implementing a gradient component computation module $46_A$ followed by an absolute value computation module $48_A$ of figure 2.

According to another embodiment, said circuitry designed to implement said at least two gradient components computation modules $46_A$, $46_B$, respectively configured to provide a value of gradient according to two distinct axis, comprises a same architecture for each axis x and y implemented in parallel.

More precisely, figure 7 represents the architecture of the circuitry for implementing a gradient component computation module $46_A$ followed by an absolute value computation module $48_A$ dedicated to axis x, and the same architecture is used for axis y and for providing $|Gy|$ but is not represented.

As previously indicated, each of said at least two gradient components computation modules $46_A$, $46_B$ implements a linear kernel as:

$$k_{\hat{x}} = \begin{vmatrix} -1 & 0 & 1 \end{vmatrix} \quad k_{\hat{y}} = \begin{vmatrix} -1 \\ 0 \\ 1 \end{vmatrix}$$

Such an implementation choice of linear kernel is indeed simple to implement while providing sufficient results for ROI proposals.

As an alternative, the Sobel kernel type can also be implemented, but it has to be noted that a more complex type of gradient, such as Sobel, did not lead to significant improvements.

As illustrated by previous figure 2, it is proposed to calculate each gradient component with two separate blocks (each for each component according the x and y axis).

It has to be remembered that in comparison with already known features detector, the one proposed according to the invention, in that it proposes to combine said gradient components computation modules providing separately a gradient according to two distinct axis, with the previous optional de-noising module 44 and furthermore to output the gradient orientation.

It has to be noted that according to one embodiment, not represented, a sequential computation of the two main axes components can be implemented.

Alternatively and advantageously, if area constraints allow it, the same architecture of figure 7 can be repeated twice in parallel, which permits to explore a more aggressive parallelization. Said circuitry of figure 7 implements specifically switched-capacitance-amplifiers and a simpler gradient kernel into account and operates as following: firstly, at sampling stage, switches S16, S21 are closed, while S201, S202 and S18 are opened. Switches S171 and S172 select the capacitance for sampling the previously denoised value hold in the intermediary buffer 60. Two values are required to compute each component. Then, corresponding switches to read/sample each value are controlled by an external digital-state-machine placed on the periphery and not represented. Once the two values are sampled, the second stage is the subtraction and absolute value computation. There, switches S16, S171, S172, S192 and S21 are opened, while S201, S02, S18 are closed. It has to be noted that the switch S18 allows changing the polarity of the read value from the capacitor below it as illustrated in figure 7. Then, during subtraction, charges from both capacitors at the left of amplifier A4 as illustrated in figure 7 are subtracted and the resulting charge is stored at the capacitor below the switch S21. Then, one gradient component, as an analog voltage, has been computed, and the rest of the circuitry carries classically the absolute value function as explained by C. Soell et al in the article entitled "Low-power analog smart camera sensor for edge detection" ICIP, 2016.

Concerning the gradient magnitude computation module receiving, as input, the outputs of said at least two absolute value computation modules $48_A$, $48_B$, such a module is configured to sum the signals from each component x and y and to compare the sum with a fixed threshold $V_{ref}$ according to the embodiment of figure 2 or with a relative value depending on the local light intensity value according to the embodiment of figure 3.

This comparison outputs either 1 (high) or 0 (low) values, thus quantizing the magnitude to 1 bit values. Indeed, it has been observed that many pixels, between 80 to 90%, are not detected as edges when the threshold is set correctly.

Thus, the gradient orientation computation module is configured to compute the gradient orientation for only one value of the 1-bit information associated to the gradient magnitude, said value representing a gradient magnitude higher than a predetermined magnitude threshold, which permits to save power and speed up gradients computation.

It has to be noted that if one assumes the ADC power to be critic, then exploiting the edge map sparsity in this specific way is not obvious regarding the method, of the state of the art, because such methods classically quantize both gradient components to 2 bit values, and then direct the result to a 4-bit-input Look-Up Table LUT. In other words, the ADC, assumed as to be the most energy consuming portion, is active for quantizing both components for every pixel, corresponding to a 4-bit output, whereas according to the present invention, if the gradient magnitude is 0, the angular calculation is not performed, and only 1 bit is read from the ADC.

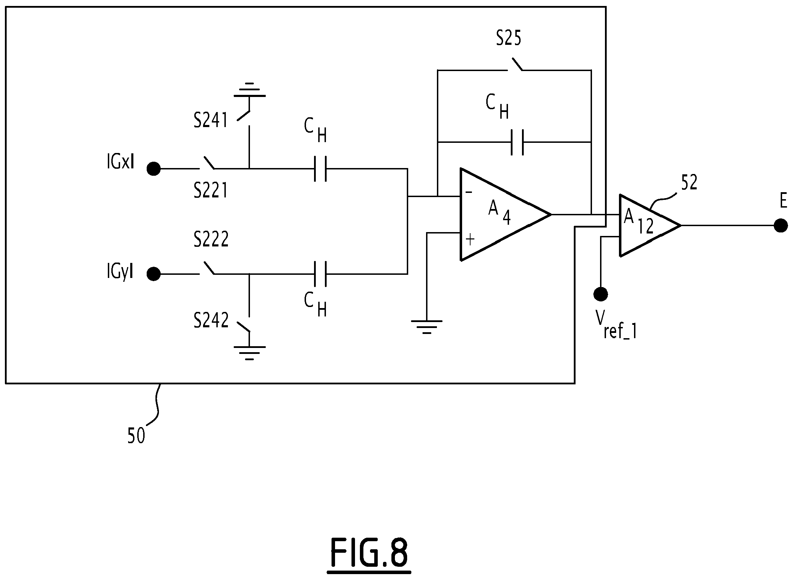

Figure 8 shows an example of circuitry for implementing the summation 50 and quantization 52 stages of the gradient magnitude computation module of figure 2.

According to another embodiment, a circuitry, designed to implement said summation 50 and quantization 52 stages configured to encode said gradient magnitude as a 1-bit information, comprises a switched-capacitance-amplifier also performing a summation.

Such a circuitry of figure 8 computes firstly, the summation of both gradient-components absolute-values $|Gx|$, $|Gy|$. Secondly, such a circuitry estimates the 1-bit gradient magnitude by comparing the later summation with a fixed reference Vref_1 in figure 8 corresponding to embodiment illustrated in figure 2.

Such circuitry is configured to operate as following: for the sampling stage, switches S241 and S242 are opened, while the rest of switches are closed. Then, the abs-component-values are sampled at capacitances located at the left of amplifier A4 A7, and the capacitor above it is ideally set to zero voltage. For the next stage, switches S221, S222 and S25 open, while switches S241, S242 are closed. Then, the charge from capacitors located at the left of A4 is transferred to the capacitance above it, completing the amplification (i.e. the summation). The summation is then compared by means of a simple comparator amplifier to the fixed reference Vref_1.

Concerning the gradient orientation computation module comprising a trigonometric ADC 54 plus an encoder 56 as illustrated in figure 2, the sign signals output sx and sy from the analog-absolute-value modules $48_A$ and $48_B$ are used in combination with the encoder 56 configured to provide four angular values, encoded in two bits.

Thus, the image pre-processing device and imager according to the invention propose an integrated circuit for providing an image-processing pipeline for on-the-fly static and dynamic features detection, facilitating the use of those for object localization and classification, with low-power and high frame rate optimization.

Such a solution and/or its variants present(s) key features such as aggressive signal quantization, improved noise due to spatial / temporal lighting changes, lower data rate, compatible with both localization and classification, and for example suitability for on-the-fly column-parallel-computations, while boosting processing time and reducing power-consumption.

In particular, the present invention proposes a column-parallel staged-pipeline pre-processing integrated circuit including both de-noising and gradient computation stages leading to good performances without needing a "standard computational unit", or a standard addressable memory, while exploit parallelism and still compute gradients on the fly.

**Claims**

1. An image pre-processing device configured to preprocess image data provided as a matrix of pixels per frame, wherein all pixels per frame are read before object localization and/or classification and/or other operation made on object, wherein said image pre-processing device comprising :

   - a features detector (12) configured to detect features in each current frame of an image sequence of a scene and to encode, for each pixel of each current frame, a N-bit feature information representative of a feature value of said pixel;
   - a virtual static image generator (14) configured to generate, a map, associated to each current frame, and comprising said N-bit feature information associated to each pixel;
   - a determining module (16) configured to determine, within each current frame, a plurality of region proposals, each region proposal being associated to a same feature;
   - a scoring module (18) configured to assign a score to each received region proposal by taking into account predetermined rules of assignment;
   - a region of interest selection module (30) configured to select, as a function of their score, regions of interest among region proposal(s) scored by said scoring module (18), said region of interest selection module (30) comprising an intra-frame region of interest filter (32) configured to select one region of interest among several distinct spatial regions of interest potentially associated to a same object;

   wherein said image pre-processing device further comprises:

   - a features local change detector (20) configured to detect a local change of features between two successive frames of the image sequence and to encode, for each pixel of the current frame corresponding to the last frame of said two successive frames, a one bit dynamic information, a first value of said one bit dynamic information being representative of a static feature belonging to both successive frames, a second value of said one bit dynamic information being representative of a dynamic feature changing between said two successive frames;
   - a virtual dynamic image generator (22) configured to generate, from said one bit dynamic information associated to each pixel, a virtual dynamic image representative of each local change between said two successive frames;
   - an integral image generator (24) configured to generate a data structure corresponding to a summed-area table of said virtual dynamic image;
   - a dynamic region determination module (26) configured to receive the region proposals provided by said determining module (16) and said integral image provided by said integral image generator (24), and configured to use said integral image to count the number of local changes per region proposal;
   - a filtering module (28) configured to provide to said scoring module (18) only the region proposals of the current frame comprising a number of local changes higher than a predetermined threshold,

   said region of interest selection module (30) further comprising :

   - an inter-frame region of interest filter (34) configured to select one region of interest among several distinct temporal regions of interest belonging to two successive frames and potentially associated to a same object; and
   - an update module (38) configured to update a list of regions of interest associated with the whole image sequence.

2. The image pre-processing device according to claim 1, wherein said features detector (12) and said features local change detector (20) are operating on the same type of image features, or wherein said features detector (12) and said features local change detector (20) are operating on a different type of image features.

3. The image pre-processing device according to claim 2, wherein when said features detector (12) and said features local change detector (20) are operating on the same type of image features, said type of image features corresponds to edges features.

4. The image pre-processing device according to anyone of the preceding claims, wherein a set formed by said features detector (12) comprises successively:

   - an image buffer (42) comprising a correlated double sampling and a circular image buffer, said image buffer being configured to receive as input each frame of said image sequence, each frame being provided as a matrix of pixels;
- at least two gradient components computation modules ($46_A$, $46_B$) respectively configured to provide a value of gradient according to two distinct axis;
- at least two absolute value computation modules ($48_A$, $48_B$) respectively configured to provide an absolute value of the value of gradient provided by one of the at least two gradient components computation modules ($46_A$, $46_B$);
- a gradient magnitude computation module receiving, as input, the outputs of said at least two absolute value computation modules ($48_A$, $48_B$), said gradient magnitude computation module comprising a summation (50) and quantization (52) stages configured to encode said gradient magnitude as a 1-bit information;
- a gradient orientation computation module receiving, as input, the outputs of said at least two absolute value computation modules ($48_A$, $48_B$), said gradient orientation computation module comprising a trigonometric analog-to-digital converter (54) and an encoder (56) configured to encode said gradient orientation as a 2-bits information.

5. The image pre-processing device according to claim 4, wherein said set further comprises a de-noising module (44), said de-noising module receiving, as input, the output of said image buffer (42), and said at least two gradient components computation modules receiving, as input, the output of said de-noising module (44).

6. The image pre-processing device according to claim 4 or 5, wherein each of said at least two gradient components computation modules ($46_A$, $46_B$) implements a linear kernel as: $k_{\hat{x}} = |{-1}\ 0\ 1|$ considering an

$$k_{\hat{y}} = \begin{vmatrix} -1 \\ 0 \\ 1 \end{vmatrix}$$

x axis and $\phantom{k_{\hat{y}}}$ considering a y axis.

7. The image pre-processing device according to anyone of claims 4 to 6, wherein the gradient orientation computation module is configured to compute the gradient orientation for only one value of the 1-bit information associated to the gradient magnitude, said value representing a gradient magnitude higher than a predetermined magnitude threshold.

8. The image pre-processing device according to claim 7, wherein said de-noising module (44) is configured to compute the local light intensity value of each pixel and to servo-control the value of said predetermined magnitude threshold depending on said local light intensity value.

9. The image pre-processing device according to anyone of claims 5 to 8, wherein a circuitry designed to implement said image buffer (42) comprises at least five capacitances, one capacitance being dedicated to sample a predetermined pixel valued used by the following de-noising module (44).

10. The image pre-processing device according to claim 9, wherein said circuitry designed to implement said image buffer (42) comprises a sixth capacitance when a pixels binning is implemented.

11. The image pre-processing device according to anyone of claims 5 to 10, wherein a circuitry designed to implement said de-noising module (44) comprises at least a low-pass filter designed to convolute the gray-intensity-image with an average kernel.

12. The image pre-processing device according to claim 11, wherein said circuitry designed to implement said de-noising module (44) further comprises an intermediary buffer following said low-pass filter, said intermediary buffer being configured to hold averaged values provided by said low-pass filter along a predetermined number of rows associated to the frame size.

13. The image pre-processing device according to anyone of the preceding claims 4 to 12, wherein a circuitry designed to implement said at least two gradient components computation modules ($46_A$, $46_B$), respectively configured to provide a value of gradient according to two distinct axis, comprises a same architecture for each axis implemented in parallel.

14. The image pre-processing device according to anyone of the preceding claims 4 to 13, wherein a circuitry, designed to implement said summation (50) and quantization (52) stages configured to encode said gradient magnitude as a 1-bit information, comprises a switched-capacitance-amplifier.

15. An imager comprising an image sensor providing image data as a matrix of pixels per frame, wherein all pixels per frame are read before object localization and/or classification and/or other operation made on object, wherein said imager comprises an image pre-processing device according to anyone of the preceding claims and an object localization and/or classification and/or other object operation implementation module (40), said image pre-processing device being configured to pre-process said image data provided by said image sensor before localization and/or classification and/or other operation made on object performed by said object localization and/or classification and/or other object operation imple-

mentation module (40).

FIG.1

FIG.2

FIG.3

$\Theta \in \{0, \frac{\pi}{4}, \frac{\pi}{2}, \frac{3\pi}{4}\}$

G = 1 or 0

$C_X = 0{,}1\,pF$

FIG.4

$V_Y$

S10

$V_X$

$A_1$

S6

S71

S79

$C = C_H/9$

44

**FIG.5**

**FIG.6**

**FIG.7**

EP 4 148 620 A1

## FIG.8

Europäisches
Patentamt

European
Patent Office

Office européen
des brevets

# EUROPEAN SEARCH REPORT

**Application Number**

**EP 21 30 6231**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM MINKYU ET AL: "A Real-Time 17-Scale Object Detection Accelerator With Adaptive 2000-Stage Classification in 65 nm CMOS", IEEE TRANSACTIONS ON CIRCUITS AND SYSTEMS I: REGULAR PAPERS, IEEE, US, vol. 66, no. 10, 19 June 2019 (2019-06-19), pages 3843-3853, XP011748041, ISSN: 1549-8328, DOI: 10.1109/TCSI.2019.2921714 [retrieved on 2019-09-26] * section II, section III; figures 2, 4, 6, 8 * | 1-15 | INV. G06K9/62 G06V10/70 G06V20/52 H04N19/00 H04N5/335 |
| A | WO 2020/034078 A1 (HUAWEI TECH CO LTD [CN]) 20 February 2020 (2020-02-20) * figures 2,3, 9,10 * | 1-15 | |
| A | ADOUANI AMAL ET AL: "Comparison of Haar-like, HOG and LBP approaches for face detection in video sequences", 2019 16TH INTERNATIONAL MULTI-CONFERENCE ON SYSTEMS, SIGNALS & DEVICES (SSD), IEEE, 21 March 2019 (2019-03-21), pages 266-271, XP033649709, DOI: 10.1109/SSD.2019.8893214 [retrieved on 2019-11-06] * section B-2); figures 3, 5 * -/-- | 1-15 | TECHNICAL FIELDS SEARCHED (IPC) G06K G06V H04N |

The present search report has been drawn up for all claims

| Place of search | Date of completion of the search | Examiner |
|---|---|---|
| Munich | 8 February 2022 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 21 30 6231

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Scott Krigg: "Computer Vision Metrics: Survey, Taxonomy, and Analysis, Chapter 2: Image Pre-Processing"<br>In: "Computer Vision Metrics: Survey, Taxonomy, and Analysis, Chapter 2: Image Pre-Processing",<br>2 January 2014 (2014-01-02), Springer and Apress Media,<br>https://link.springer.com/content/pdf/10.1007/978-1-4302-5930-5, XP055581548,<br>* the whole document *<br>----- | 1-15 | |
| A | RAGESH N K ET AL: "Pedestrian Detection in Automotive Safety: Understanding State-of-the-Art",<br>IEEE ACCESS,<br>vol. 7, 19 April 2019 (2019-04-19), - 19 April 2019 (2019-04-19), pages 47864-47890, XP011720293,<br>DOI: 10.1109/ACCESS.2019.2909992<br>[retrieved on 2019-04-19]<br>* section B, 3);<br>figures 12, 13 *<br>----- | 1-15 | **TECHNICAL FIELDS SEARCHED (IPC)** |

The present search report has been drawn up for all claims

| Place of search | Date of completion of the search | Examiner |
|---|---|---|
| Munich | 8 February 2022 | Trimeche, Mejdi |

EPO FORM 1503 03.82 (P04C01)

page 2 of 2

## ANNEX TO THE EUROPEAN SEARCH REPORT
## ON EUROPEAN PATENT APPLICATION NO.

EP 21 30 6231

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2022

| Patent document cited in search report | | Publication date | Patent family member(s) | | Publication date |
|---|---|---|---|---|---|
| WO 2020034078 | A1 | 20-02-2020 | CN | 112534816 A | 19-03-2021 |
| | | | EP | 3808085 A1 | 21-04-2021 |
| | | | US | 2021168372 A1 | 03-06-2021 |
| | | | WO | 2020034078 A1 | 20-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. YOUNG et al.** A data-compressive 1.5/2.75-bit Log-Gradient QVGA Image Sensor With Multi-Scale Readout for Always-on Object Detection. *IEEE Journal of Solid State Circuits,* 2019, vol. 54 (11
- **C. SOELL et al.** Low-power analog smart camera sensor for edge detection. *ICIP,* 2016
- **T.-H. HSU ; C. POSCH et al.** A 0.5-V Real-Time Computational CMOS Image Sensor With Programmable Kernel for Feature Extraction,. *IEEE Journal of Solid-State Circuits,* 2020
- Retinomorphic Event-Based Vision Sensors: Bioinspired Cameras With Spiking Output. *Proceedings of the IEEE,* 2014, vol. 102
- **C. L. ZITNICK et al.** Edge Boxes: Locating Object proposals from Edges. *European Conference on computer Vision,* 2014
- **J.CHOI et al.** A 3.4-uW Object Adaptive CMOS Image Sensor With Embedded Feature Extraction Algorithm for Motion-Triggered Object-of-Interest Imaging. *IEEE Journal of Solid State Circuits,* 2014, vol. 49 (01), 289-300
- **T.-H. HSU et al.** A 0.5-V Real-Time Computational CMOS Image Sensor With Programmable Kernel for Feature Extraction. *IEEE Journal of Solid-State Circuits,* 2020
- **T.-H. HSU et al.** A 0.5-V Real-Time Computational CMOS Image Sensor With Programmable Kernel for Feature Extraction,. *IEEE Journal of Solid-State Circuits,* 2020